# EUROPEAN PATENT APPLICATION

(11) **EP 4 826 490 A1**
(43) Date of publication of application: **21.10.2026**
(21) Application number: 26172171.6
(22) Date of filing: 14.04.2026
(51) Int. Cl.: G06F 1/20, G01R 31/28, G06F 11/26, G06F 119/08

(54) **CHIP EMULATING DEVICE, SYSTEM AND METHOD FOR TESTING COMPUTING DEVICE COMPONENTS**

(30) Priority: 14.04.2025 US 202519177852
(71) Applicant: Next Silicon Ltd, 5348303 Givatayim (IL)
(72) Inventor: MIZRAHI, Yehuda, 4035440 Kfar Yona (IL)
(74) Representative: Boult Wade Tennant LLP

(57) **Abstract**

The present disclosure relates to hardware emulation for testing computing devices, and more particularly to a chip emulating device designed to emulate an integrated circuit (IC) chip for testing printed circuit boards (PCBs) and associated components of a target computing device prior to production of the actual chip. The claimed invention represents chip emulating device, and system and method for testing computing device components that provide an improvement to the technological field of hardware testing and validation by accurately emulating integrated circuit behavior across thermal, electrical, and mechanical domains simultaneously, thereby providing for an increased testing efficiency and accuracy. The suggested invention provides for streamlining the development process, reducing time-to-market, and improving overall product quality and reliability in the electronics industry.

## Description

### CROSS-REFERENCE TO RELATED APPLICATIONS

This application claims the benefit of priority of U.S. Patent Application No. 19/177,852, filed on April 14, 2025, titled "CHIP EMULATING DEVICE, SYSTEM AND METHOD FOR TESTING COMPUTING DEVICE COMPONENTS", the contents of which are all incorporated herein by reference in their entirety.

### FIELD OF THE INVENTION

The present disclosure relates to hardware emulation for testing computing devices, and more particularly to a chip emulating device designed to emulate an integrated circuit (IC) chip for testing printed circuit boards (PCBs) and associated components of a target computing device prior to production of the actual chip.

### BACKGROUND OF THE INVENTION

In today's rapidly evolving technological landscape, the accelerating pace of innovation has dramatically compressed development timelines across the electronics industry. As market demands push for faster product releases, the time frames allocated for various manufacturing stages-spanning both hardware and software development-have become increasingly constrained. This acceleration creates significant challenges for engineers who must validate and test complex electronic components under ever-tightening schedules, while still maintaining rigorous quality standards and performance requirements.

Traditional methods of testing printed circuit boards (PCBs) and associated components often involve waiting for the actual integrated circuit (IC) chips to be manufactured before conducting comprehensive system-level evaluations. This approach can lead to delays in product development cycles and increased costs if issues are discovered late in the process. While various emulation techniques exist for testing thermal, electrical, and mechanical aspects of devices under development, these techniques typically address these aspects separately. This isolated approach fails to provide reliable testing results since, in the final product, these aspects are highly interrelated. Consequently, such fragmented emulation techniques often result in critical design issues being revealed only during final product testing after the actual IC chip has been manufactured, when corrections are most costly and time-consuming.

In particular, testing the thermal management of electronic systems presents a significant challenge for designers and engineers. As computing devices become more powerful and compact, managing heat dissipation has become a critical factor in ensuring reliable operation. Accurately predicting and testing the thermal behavior of components as well as the effectiveness of cooling solutions before final assembly can help identify potential issues early in the development process.

Electrical characteristics of integrated circuits, such as power consumption patterns and transient responses, also play a crucial role in overall system performance. Testing the operation of a power supply in combination with other components on a PCB of the target computing device is essential for optimizing design and ensuring compatibility between various elements thereof.

Furthermore, the mechanical aspects of chip packaging and integration with PCBs can significantly impact system reliability. For instance, factors like compatibility of dimensions between the computing device components that is required to provide proper thermal coupling with the cooling elements, as well as more complicated factors such as board warpage, which may result from pressure applied to achieve proper thermal coupling with cooling elements or from thermal expansion, need to be thoroughly evaluated during the testing phase.

### SUMMARY OF THE INVENTION

Accordingly, there is a need for chip emulating techniques that would provide improvement to the technological field of hardware testing and validation. Specifically, there is a need for solutions that can accurately emulate integrated circuit behavior across thermal, electrical, and mechanical domains simultaneously, thereby providing for an increased efficiency and accuracy of operational readiness testing. Such solutions would thereby streamline the development process, reduce time-to-market, and improve overall product quality and reliability in the electronics industry. It is further a need for testing systems and methods that incorporate such improved chip emulation capabilities, which would advance the aforementioned technological field by enabling more thorough validation of thermal, electrical and mechanical compatibility across different electronic components of the computing device prior to final production, specifically providing for improved accuracy and reliability when identifying potential issues of the target computing device design, thus allowing their resolution earlier in the development cycle when corrections are less costly and time-consuming.

To address the aforementioned needs, the following is suggested.

According to an aspect of the present disclosure, a chip emulating device for testing components of a computing device is provided. The chip emulating device may include: a first substrate board configured to be assembled on a target footprint located on a printed circuit board (PCB) of the computing device, said footprint being configured to provide operative connection of a target chip to the PCB; a die emulating element operatively connected to the first substrate board, the die emulating element comprising one or more heating elements designed to emulate, given predefined power parameters of the computing device, a thermal behaviour of a die of the target chip or at least one component thereof, when the chip emulating device is assembled on the PCB and is being powered therethrough.

According to another aspect of the present disclosure, a system for testing components of a computing device is provided. The system may include: a printed circuit board (PCB) of the computing device, the PCB comprising a power supply module and a target footprint configured to provide operative connection of a target chip; and a chip emulating device. The chip emulating device may include: a first substrate board operatively connected to the PCB via the target footprint; a die emulating element operatively connected to the first substrate board, the die emulating element comprising one or more heating elements designed to emulate, given predefined power parameters of the power supply module, a thermal behaviour of a die of the target chip or at least one component thereof; and a microcontroller operatively connected to the one or more heating elements and configured to control power consumption thereof, said one or more heating elements being powered by the power supply module.

According to yet another aspect of the present disclosure, a method for testing components of a computing device is provided. The method may include operating a microcontroller operatively connected to one or more heating elements, to control the power consumption thereof, when being powered via a printed circuit board (PCB) of the computing device, said one or more heating elements being designed to emulate, given predefined power parameters of the computing device, an electrical and thermal behaviour of a die of a target chip or at least one component thereof, said microcontroller and said one or more heating elements being assembled on a substrate board operatively connected to the PCB via a target footprint configured to provide operative connection of the target chip to the PCB. The method may further include: measuring, using one or more sensors, one or more thermal and electrical parameters of the computing device; and providing, via a user interface module, (i) an indication of one or more flaws in operation of the computing device, based on the measured one or more thermal and electrical parameters; and (ii) suggestions for one or more corrective actions to fix said one or more flaws, based on the measured one or more thermal and electrical parameters.

In some embodiments, said one or more heating elements are further designed to emulate, given power parameters of the computing device, an electrical behaviour of the target chip or at least one component thereof.

In some embodiments, at least one of (i) the first substrate board; and (ii) the die emulating element is further configured to exhibit substantially similar deformation characteristics under pressure as (a) a substrate board of the target chip; and (b) the die of the target chip, respectively.

In some embodiments, the chip emulating device may further include: one or more thermal sensors configured to measure temperature of said one or more heating elements, respectively; and a microcontroller operatively connected to the one or more heating elements and said one or more thermal sensors. The microcontroller may be further configured to: control a power consumption of the one or more heating elements; receive, from said one or more thermal sensors, the measured temperature of said one or more heating elements; and output the measured temperature of said one or more heating element to a user interface module, to be provided via a user interface.

In some embodiments, said one or more heating elements may be positioned on a top side of the die emulating element, and said one or more thermal sensors may be positioned on a bottom side of the die emulating element, across from said one or more heating elements, respectively.

In some embodiments, the first substrate board may have dimensions of a substrate board of the target chip and a pinout compatible with the target footprint; and wherein the die emulating element may include a second substrate board sized according to the dimensions of a die of the target chip. Each of said one or more heating elements may include a conductive trace formed on a surface of the second substrate board so as to substantially cover an area on the surface of the second substrate board corresponding to an area of a respective component of the die of the target chip.

In some embodiments, the conductive trace may be dimensioned so as to operate, given the predefined power parameters of the computing device, with a power and thermal density substantially equal to an expected power and thermal density, respectively, of the respective component of the die at the predefined operation mode of the target chip.

In some embodiments, the conductive trace may be formed to have at least one of a zig-zag shape and spiral shape characterized by length, width and height such as to provide, given the predefined power parameters of the computing device, a power density substantially equal to the expected power density of the respective component of the die at the predefined operation mode of the target chip.

In some embodiments, the die emulating element may be configured so as to operate, given the predefined power parameters of the computing device, with a power consumption substantially equal to an expected power consumption of the target chip at a predefined operation mode thereof.

In some embodiments, said predefined operation mode of the target chip may be the one demanding peak performance thereof.

In some embodiments, said microcontroller may be further configured to operate said one or more heating elements to simulate various operation scenarios of the target chip or components thereof, said operation scenarios comprising at least one of: (i) toggling said one or more heating elements in a predefined pattern, to test a transient response of a power supply module of the computing device; (ii) maintaining said one or more heating elements in an active state for a predefined period, to test a direct current (DC) power delivery stability and heat dissipation of the computing device.

In some embodiments, the chip emulating device may further include a structural stiffener ring, attached to and extending along the peripheral area of the first substrate board.

In some embodiments, said one or more heating elements may be further designed to emulate, given the predefined power parameters of the power supply module, an electrical behaviour of the target chip or at least one component thereof.

In some embodiments, the PCB may further include one or more peripheral electronic components assembled thereon. The system may further include: electrical testing means configured to measure one or more electrical parameters of at least one of (i) the one or more peripheral electronic components; and (ii) the power supply module; and a user interface module operatively connected to the electrical testing means and configured to provide a visual interface to indicate one or more flaws in operation of said one or more peripheral electronic components and the power supply module, respectively, based on the measured one or more electrical parameters.

In some embodiments, the system may further include one or more thermal sensors configured to measure temperature of at least one of (i) the chip emulating device (ii) said one or more peripheral electronic components; and (iii) the power supply module. The system may further include at least one heat sink thermally coupled with at least one of (i) the chip emulating device (ii) said one or more peripheral electronic components; and (iii) the power supply module and configured to dissipate heat therefrom. The system may further include a user interface module operatively connected to the one or more thermal sensors and configured to provide a visual interface to indicate one or more heat dissipation flaws, based on the measured temperature.

In some embodiments, said one or more thermal sensors may include one or more thermal sensors operatively connected to the microcontroller and configured to measure temperature of said one or more heating elements, respectively. The microcontroller may be further configured to: receive, from said one or more thermal sensors, the measured temperature of said one or more heating elements; and output the measured temperature of said one or more heating element to the user interface module. The user interface module may be configured to indicate said one or more heat dissipation flaws, further based on the measured temperature of said one or more heating elements.

In some embodiments, the user interface module may be operatively connected to the microcontroller, and may be further configured to operate, via the microcontroller, said one or more heating elements to simulate various operation scenarios of the target chip or components thereof, said operation scenarios comprising at least one of: (i) toggling said one or more heating elements in a predefined pattern, to test a transient response of said power supply module; (ii) maintaining said one or more heating elements in an active state for a predefined period, to test a direct current (DC) power delivery stability and heat dissipation of the computing device.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is an isometric view of a printed circuit board (PCB) a computing device with a chip emulating device operatively connected thereto, according to some embodiments of the present invention;
Fig. 2 is a block diagram of a system for testing components of a computing device, according to some embodiments of the present invention;
Fig. 3A is a top view of a die emulating element of the chip emulating device (the first (upper) layer of the second substrate board), according to some embodiments of the present invention;
Fig. 3B is an enlarged top view of the die emulating element (the top left corner of the first (upper) layer of the second substrate board), according to some embodiments of the present invention;
Fig. 3C is a top view of the die emulating element (the second layer of the second substrate board), according to some embodiments of the present invention;
Fig. 3D is an enlarged top view of the die emulating element (the top left corner of the second layer of the second substrate board), according to some embodiments of the present invention;
Fig. 3E is a top view of the die emulating element (the third layer of the second substrate board), according to some embodiments of the present invention;
Fig. 3F is an enlarged top view of the die emulating element (the top left corner of the third layer of the second substrate board), according to some embodiments of the present invention;
Fig. 3G is a top view of the die emulating element (the fourth layer of the second substrate board), according to some embodiments of the present invention;
Fig. 3H is an enlarged top view of the die emulating element (the top left corner of the fourth layer of the second substrate board), according to some embodiments of the present invention;
Fig. 3I is a top view of the die emulating element (the fifth layer of the second substrate board), according to some embodiments of the present invention;
Fig. 3J is a top view of the die emulating element (the sixth layer of the second substrate board), according to some embodiments of the present invention;
Fig. 3K is an illustration of essential aspects of inter-layer connection between said one or more heating elements and said one or more thermal sensors, according to some embodiments of the present invention;
Fig. 3L is a table showing specifications for various drills shown in Figs. 3A-3K, according to some embodiments of the present invention;
Fig. 4A is a top view of a first substrate board of the chip emulating device (the first layer), according to some embodiments of the present invention;
Fig. 4B is a top view of the first substrate board of the chip emulating device (the second layer), according to some embodiments of the present invention;
Fig. 4C is a top view of the first substrate board of the chip emulating device (the third layer), according to some embodiments of the present invention;
Fig. 4D is a top view of the first substrate board of the chip emulating device (the fourth layer), according to some embodiments of the present invention;
Fig. 4E is a top view of the first substrate board of the chip emulating device (the fifth layer), according to some embodiments of the present invention;
Fig. 4F is a top view of the first substrate board of the chip emulating device (the sixth layer), according to some embodiments of the present invention;
Fig. 4G is a table showing specifications for various drills shown in Figs. 4A-4F, and also a stack-up of the layers of the first substrate board, according to some embodiments of the present invention; and
Fig. 5 is a flow diagram, depicting a method for testing components of a computing device, according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention. Some features or elements described with respect to one embodiment may be combined with features or elements described with respect to other embodiments. For the sake of clarity, discussion of same or similar features or elements may not be repeated.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term "set" when used herein may include one or more items.

As used herein, the terms "printed circuit board" (PCB) and "substrate board" are interchangeable in terms of their material composition and functional properties, but are differentiated to clearly identify distinct components. As known in the art, a "printed circuit board" commonly refers to a laminated sandwich structure of conductive and insulating layers, each with a pattern of traces, planes, and other features etched from one or more sheet layers of copper laminated onto or between sheet layers of a non-conductive substrate. Accordingly, as used herein, the terms "printed circuit board", "PCB", and "substrate board" (including "first" substrate board and "second" substrate board) may refer to the objects of the same type. Different terms are used herein solely to unambiguously distinguish between different elements within the context of the present invention.

It should further be understood that the terms "first" and "second" are used solely to differentiate between elements unambiguously and do not imply any specific order or sequence unless explicitly stated otherwise.

As used herein, the term "computing device" refers to any device that, when manufactured and assembled, includes a chip (an integrated circuit, IC) as its main processing or controlling component. This chip is operatively connected to the printed circuit board (PCB) of the "computing device", wherein the PCB may include various peripheral electronic components that support the operation of the IC. It shall further be clear that, although referred to herein as a "computing device", the pre-production testing of this device, as suggested herein, is performed without the computing component - the target chip, using a chip emulating device instead.

As used herein, the terms "integrated circuit", "IC," "chip," and similar terms refer to the same type of component and may be used interchangeably. In some embodiments, an IC may be a System on Chip (SoC), a Field-Programmable Gate Array (FPGA), an Application-Specific Integrated Circuit (ASIC), an Application-Specific Standard Product (ASSP), or similar electronic components. These ICs may perform functions such as data processing, memory storage, signal processing or other functions as known in the field.

It shall further be understood that, although the present disclosure mostly refers to "pre-production testing" or "testing for operational readiness", same techniques as suggested herein may be applied for performing tests at other stages, including post-production testing and debugging. Hence, the scope of the present invention shall not be considered limited in this regard.

Unless explicitly stated, the method embodiments described herein are not constrained to a particular order or sequence. Additionally, some of the described method embodiments or elements thereof can occur or be performed simultaneously, at the same point in time, concurrently, or iteratively and repeatedly.

The present disclosure addresses the aforementioned needs and resolves problems in the prior art by providing a chip emulating device, system, and method for testing components of a computing device. These solutions may offer comprehensive and accurate emulation of integrated circuit behavior across thermal, electrical, and mechanical domains simultaneously.

As known in the art, chips typically include several key components, including a substrate board and a die.

In chip design, the substrate board, also known as the package substrate, serves several important functions. It provides mechanical support for mounting the semiconductor dies, ensuring the structural integrity of the assembly. Additionally, it facilitates electrical connections between the chip and external circuitry through a network of conductive traces and vias, providing for power and signal communication to the chip.

The die, in turn, is a critical component that contains the actual integrated circuit. It is a small block of semiconducting material, typically silicon, on which the functional circuitry is fabricated. The die houses the transistors, capacitors, resistors, and other electronic components that perform the chip's intended functions, such as data processing, memory storage, signal processing, and power management. Once fabricated, the die is mounted onto the substrate board, where it is electrically connected to external circuitry through bonding wires or solder balls.

As suggested herein, the chip emulating device includes a first substrate board configured to be assembled on a target footprint of a printed circuit board (PCB) of the computing device. In the context of the present disclosure, the term "target" footprint shall be understood as referring to the footprint on the PCB of the computing device, designed to provide an operative connection of the target chip to the PCB (i.e., having the required pinout, dimensions etc.). This configuration allows the chip emulating device to interface with the PCB in a manner similar to the target chip, providing a realistic testing environment.

As further suggested herein, the chip emulating device may further include a die emulating element operatively connected to the first substrate board, similar as the actual die is connected to the substrate board of the target chip. As further suggested, the die emulating element includes one or more heating elements. These heating elements are designed to emulate, given predefined power parameters of the computing device (when the chip emulating device is assembled on the PCB and is being powered therethrough), the thermal behavior of a die of the target chip or at least one component thereof.

Furthermore, as shall be understood, by being configured to provide the thermal emulation of the target chip given the predefined power parameters of the computing device, the chip emulating device also inherently provides, at least in some respects, the electrical emulation thereof. E.g., in some embodiments, the die emulating element may be configured so as to operate, given the predefined power parameters of the computing device, with a power consumption substantially equal to an expected power consumption of the target chip at a predefined operation mode thereof, as further explained in greater detail. Specifically, the heating elements may be designed to emulate the electrical behavior of the actual die of the target chip or its components, such as exhibit the same power consumption, as well as same power and thermal density as the die or its components, respectively.

This functionality enables simultaneous thermal and electrical testing without the need for the actual target chip to be manufactured, providing a more comprehensive evaluation of the computing device's performance. Furthermore, as according to some embodiments of the present invention, by having dimensions and positioning that are the same as (or substantially similar to) the target chip, the chip emulating device allows for thermal management tests and the evaluation of heat dissipation elements (e.g., heat sinks, cold plates, liquid cooling assemblies, etc.) at the pre-production stage, when the target chip is not yet manufactured. As the thermal, electrical, and mechanical aspects (e.g., dimensions, positioning, etc.) of the chip design, as well as the design of the entire computing device, are deeply interrelated, concealed design issues may arise due to this interrelation in the final product. Accordingly, the ability to provide thermal, electrical, and mechanical emulation simultaneously provides a synergistic technical effect, significantly improving upon prior art solutions, as further explained in greater detail. Thereby, the disclosed solutions may provide for improved accuracy and reliability in identifying potential issues of the target computing device design. By emulating the target chip's behavior across multiple domains simultaneously, the present disclosure offers a more realistic and comprehensive testing environment compared to traditional methods that address thermal, electrical, and mechanical aspects separately.

To elaborate on and expand the abovementioned capabilities of the suggested chip emulating device, according to another aspect of the present disclosure, the system for testing components of a computing device is suggested. The system incorporates the chip emulating device into a larger testing framework. In particular, the system includes a PCB of the computing device, comprising a power supply module and a target footprint, along with the chip emulating device assembled thereon. The chip emulating device additionally comprises a microcontroller operatively connected to the heating elements. The microcontroller controls power consumption of the heating elements, while the heating elements are being powered by the power supply module. This arrangement allows for precise control over the emulated chip's behavior and enables testing of the power supply module's performance under various load conditions.

Finally, according to yet another aspect of the present disclosure, the method for testing components of a computing device is suggested. The method leverages the capabilities of the chip emulating device and system. It involves operating the microcontroller to control the power consumption of the heating elements, measuring thermal and electrical parameters of the computing device using sensors, and providing feedback through a user interface module. This feedback includes indications of flaws in the computing device's operation and suggestions for corrective actions, based on the measured parameters. This comprehensive approach allows for early detection and resolution of issues in the computing device's design.

By providing these solutions, the present disclosure addresses the need for more efficient and accurate testing methods in the rapidly evolving electronics industry. The chip emulating device, system, and method allow for thorough validation of thermal, electrical, and mechanical compatibility across different electronic components of the computing device prior to final production. This approach may significantly reduce development time and costs by enabling the identification and resolution of potential issues earlier in the development cycle, when corrections are less costly and time-consuming.

In some implementations, the chip emulating device and system may incorporate additional features (described in detail further below) that further enhance their testing capabilities. These may include thermal sensors for precise temperature measurements, specially designed conductive traces to accurately emulate power and thermal densities of specific chip components, and the ability to simulate various operation scenarios. These features may allow for even more detailed and accurate testing of the computing device's performance under different operating conditions, further improving the relevant technological field.

Overall, the present disclosure provides a comprehensive solution to the challenges faced in hardware testing and validation, potentially streamlining the development process, reducing time-to-market, and improving overall product quality and reliability in the electronics industry.

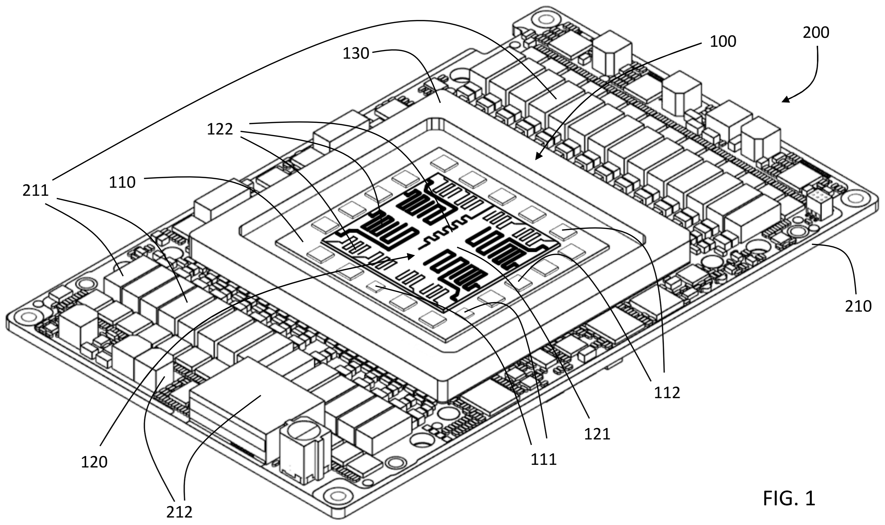

Reference is now made to Figs. 1, showing an isometric view of printed circuit board (PCB) 210 of computing device 200 with chip emulating device 100 operatively connected thereto, according to some embodiments of the present invention.

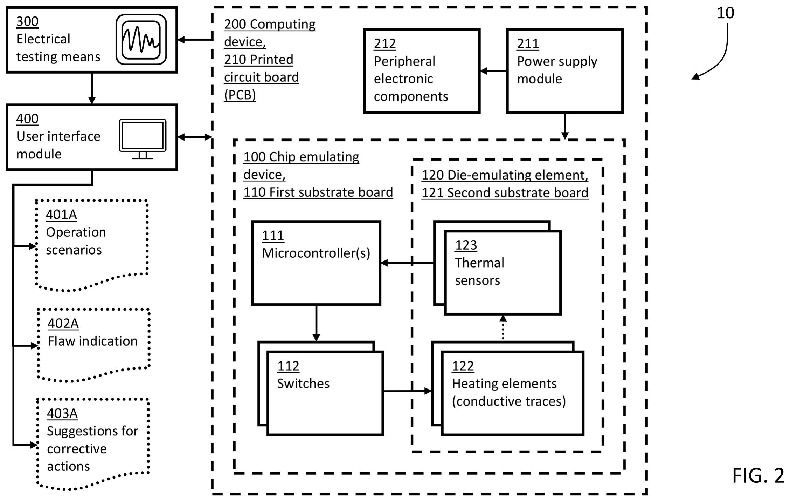

For the purpose of clarity and conciseness, the following description may, in some respects, relate solely to the chip emulating device (e.g., chip emulating device 100). However, it shall be understood that the same principles and descriptions may be equally applied to the suggested system (e.g., system 10, as shown in Fig. 2), as it may include the chip emulating device in all embodiments discussed herein.

Furthermore, for the purpose of clarity and conciseness, the description of similar or identical components shown in the provided figures may be omitted.

As shown in Fig. 1, in some embodiments, computing device 200 may include PCB 210 designed to be operatively connected to the target chip (not shown) via the target footprint (not shown) and including a plurality of peripheral electronic components 212, including or in addition to power supply 211 (also referred herein as "power supply module"), mounted thereon. Power supply module 211 may be configured to supply power via conducting traces of PCB 210 to the target chip and the peripheral components 211, as required and defined by the design of computing device 200.

PCB 210 may consist of a non-conductive substrate, typically made of fiberglass, composite epoxy, or other laminate materials, onto which conductive pathways are etched or printed. These pathways, often made of copper, facilitate electrical connections between electrical components installed thereon.

] It should be understood that the demonstrated configuration of PCB 210 is provided solely as a non-exclusive example. Other, completely different designs and layouts may be used, depending on the specific application of computing device 200. Fig. 1 further illustrates chip emulating device 100. Chip emulating device 100 may include substrate board 110 (also referred herein as "first" substrate board) operatively connected to PCB 210 via the target footprint (which is originally designed for connection with the target chip). Chip emulating device 100 may further include die emulating element 120 operatively connected to substrate board 110. In some embodiments, the dimensions and mutual positioning of the die emulating element 120 and substrate board 110 may be the same (or substantially similar) as those of the die and substrate board of the target chip. This ensures reliable emulation and allows for testing additional components of the computing device 200, such as the cooling assembly (not shown).

The die emulating element 100 may include one or more heating elements 122 designed to emulate, given predefined power parameters of power supply 211, a thermal behaviour of the die of the target chip or at least one component thereof.

As known in the art, die of the chip may include multiple components integrated into a single piece of semiconducting material. These components can include, but are not limited to, memory units (e.g., High Bandwidth Memory (HBM)), multiple cores etc. As can be seen, in some embodiments, heating elements may be designed to emulate each of the components of the die separately: e.g., to have the same overall dimensions, location within the die layout, as well as to exhibit, given predefined power parameters of power supply 211, the same power and thermal density as respective components of the real die. These aspects of emulation are explained in greater detail further below.

As shown, heating elements 122 may be positioned on the top side of die emulating element 120. Substrate board 110 may have dimensions of the substrate board of the target chip (not shown) and a pinout compatible with the target footprint. In some embodiments, die emulating element 120 may include substrate board 121 (also referred herein as "second" substrate board) sized according to the dimensions of the die of the target chip.

In some embodiments, each of heating elements 122 may be or may include a conductive trace formed on the surface of substrate board 121 so as to substantially cover an area on the surface of substrate board 121 corresponding to an area of the respective component of the die of the target chip. As shown, conductive traces of heating elements 122 may be formed to have a zig-zag shape (or, alternatively, a spiral shape or any other shape that covers a specific area).

In some embodiments, chip emulating device 100 may further include one or more switches 112 (e.g., Field-Effect Transistors (FET)) and microcontrollers 111. Microcontrollers 111 may be operatively connected to heating elements 122 via switches 112 and may be configured to control power consumption of the one or more heating elements by operating switches 112.

In some embodiments, chip emulating device 100 may further include structural stiffener ring 130, attached to and extending along the peripheral area of substrate board 110. As known in the art, a structural stiffener ring (such as structural stiffener ring 130) is a component used in semiconductor packaging to enhance the mechanical stability of the package, which, in the suggested invention, may be applied to substrate board 110 with die emulating element 120 assembled thereon. It is typically attached to the surface of the package substrate (e.g., substrate board 110) and helps to reduce warpage, which can occur due to thermal expansion differences between various materials in the package. By providing additional support, stiffener ring 130 ensures that the package of chip emulating device 100 maintains its structural integrity, thereby improving the reliability and performance of the electronic components housed within. By adding rigidity to the package, stiffener ring 130 improves the overall coplanarity of chip emulating device 100 with respect to PCB 210. This may be crucial for emulation aspects, as warpage of substrate board 110 or die emulating element 120 can significantly affect the heat dissipation provided by the cooling means under test, thereby reducing the reliability of the test results.

Reference is now made to Fig. 2, which is a block diagram of system 10 for testing components of computing device 200, according to some embodiments of the present invention.

In some embodiments, system 10 may be implemented as a combination of hardware and software modules. Furthermore, system 10 may be adapted to execute one or more modules of instruction code (e.g., stored in the memory of microcontroller 111, user interface module 400 (described further in greater details) to request, receive, analyze, calculate and produce various data. As further described in detail herein, system 10 may be adapted to execute one or more modules of instruction code in order to perform the steps of the claimed method.

As shown in Fig. 2, arrows may represent the flow of one or more data elements to and from system 10 and/or among modules or elements of system 100. Some arrows have been omitted for the purpose of clarity.

As shown in Fig. 2 and as explained with reference to Fig. 1 above, computing device 200 may include PCB 210. PCB 210 may include various peripheral electronic components 212 and power supply module 211. System 100 may further include chip emulating device 100. PCB 210 may be operatively connected to chip emulating device 100 via the target footprint (the footprint being configured to provide operative connection of the target chip (not shown) to the PCB). Chip emulating device 100 and peripheral components may be configured to be powered by power supply module 211, via PCB 210. Chip emulating device 100 may include substrate board 110 with die emulating element 120 assembled thereon.

Substrate board 110 may be assembled on the target footprint. Die emulating element 120 may be operatively connected to substrate board 110, and may include heating elements 122 designed to emulate, given predefined power parameters of computing device 200 (of power supply module 211), a thermal behaviour of the die of the target chip or at least one component thereof, when chip emulating device 110 is being powered by power supply module 211 through PCB 210.

In some embodiments, heating elements 122 may be further designed to emulate, given power parameters of computing device 200 (e.g., of power supply module 211), an electrical behaviour of the target chip or at least one component thereof, e.g., provide the same power consumption, power density as the die of the target chip, or as components of the die of the target chip, respectively.

In some embodiments, chip emulating device 100 may further include one or more thermal sensors 123 each configured to measure temperature of heating elements 122, respectively. In some embodiments, thermal sensors 123 may be assembled on substrate board 121.

In some embodiments, chip emulating device 100 may further include one or more microcontrollers 111 operatively connected to heating elements 122 and thermal sensors 123. Microcontrollers 111 may be assembled on substrate board 110 (as shown in Fig. 1). In some embodiments, microcontrollers 111 may store program instructions, upon execution of which microcontrollers 111 may be configured to control the power consumption of heating elements 122 (e.g., by operating switches 112), as well as to receive temperature measurements from sensors 123, which may be used for further analysis.

In some embodiments, system 10 may further include electrical testing means 300. Electrical testing means 300 may be configured to measure one or more electrical parameters of one or more peripheral electronic components 212, and/or electrical parameters of the power supply module. The electrical parameters may include, e.g., voltage stability, voltage transient response, power efficiency, voltage ripple level, power rail noise spectrum etc. Common examples of such testing means include oscilloscope, spectrum analyser, amperemeter, voltmeter etc., which are widely used in PCB and chip design to ensure proper functionality and connectivity of the components.

In some embodiments, system 10 may further include user interface module 400 operatively connected to electrical testing means 300 and configured to provide a visual interface to indicate one or more flaws (flaw indication 402A) in operation of one or more peripheral electronic components 212 and power supply module 211, respectively, based on the measured one or more electrical parameters measured by electrical testing means 300. User interface module 400 may be further configured to provide suggestions 403A for one or more corrective actions to fix said one or more flaws (e.g., during the tests an undesired transient responses may be formed in certain segment of the electrical circuit of PCB 210, and the corrective action to fix this flaw may be a suggestion to fix the control loop). User interface module 400 can include graphical display or touchscreen to visually present test results and diagnostic information. For example, a touchscreen interface might display real-time data and alerts (flaw indication 402A), allowing technicians to quickly identify and address issues in the design of PCB 210.

In some embodiments, microcontroller 111 may be further configured to operate heating elements 122 to simulate various operation scenarios of the target chip or components thereof (e.g., components of the die, as explained above). In some embodiments, said simulation of the operation scenarios may be activated and monitored using user interface module 400, which may be operatively connected to microcontrollers 111, and configured to operate, via microcontrollers 111, heating elements 122 to simulate the scenarios (e.g., module 400 may output operation scenarios 401A and upload them to microcontroller 111 which may be configured to operate switches 112 to simulate the uploaded scenarios 401A).

The operation scenarios may include, e.g.: (i) toggling heating elements 122 in a predefined pattern (e.g., via switches 112), to test the transient response of power supply module 211 of computing device 200; (ii) maintaining heating elements 122 in an active state for a predefined period, to test direct current (DC) power delivery stability.

To test the transient response, electrical testing means 300, specifically an oscilloscope, may be connected to the output of the power supply module 211. The chip-emulating device 100, assembled on PCB 210, may then be operated via microcontrollers 111 to simulate operation scenarios 401A, such as by toggling heating elements 122 in a predefined pattern (e.g., via switches 112).

The predefined pattern may include switching between states where only one heating element 122 is active (e.g., heating element 122' responsible for emulating the first core of the die of the target chip) and states where multiple heating elements 122 are active (e.g., heating elements 122' responsible for emulating both the first and second cores of the die of the target chip). It may also include switching from a state where all heating elements 122 are inactive to a state where all heating elements 122 are active.

While toggling heating elements 122, the voltage variation may be determined using the oscilloscope, as a function of immediate electrical current transitions. Specifically, transient response may be determined as a voltage variation caused by immediate current variation, e.g., by measuring voltage during or right after the current transient.

The goal of the design is to have a power supply providing sufficiently stable voltage in all operation scenarios. However, in practice, in response to sudden current changes, the output voltage of power supply module 211 may drop significantly. In the transient response tests, the voltage decrease may be evaluated in relation to a predefined threshold corresponding to the minimum voltage level required for the normal operation of the target chip and other PCB 210 components.

If during the tests the voltage falls below the threshold, user interface module 400 may indicate a problem with the transient response of power supply 211 (e.g., flaw indication 402A) and suggest changing the power supply module 211 to a more powerful one (e.g., suggestion 403A).

As indicated above, system 10 may be configured to test the performance of thermal management components (e.g., heat sinks, cold plates, liquid cooling components, etc.).

To perform thermal management tests, in some embodiments, the operation scenarios may further include maintaining heating elements 122 in an active state for a predefined period, to test heat dissipation from (a) chip emulating device 100, specifically, form heating elements 122; (b) power supply module 211; and (c) one or more peripheral components 212.

In some embodiments, system 10 may further include one or more thermal sensors configured to measure temperature of at least one of (i) chip emulating device 100 (e.g., sensors 123) (ii) one or more peripheral electronic components 212; and (iii) power supply module 211. User interface module 400 may be operatively connected to said thermal sensors (e.g., sensors 123) and configured to provide a visual interface to indicate one or more heat dissipation flaws (flaw indication 402A), based on the measured temperature. Additionally, user interface module 400 may provide suggestions 403A to fix thermal management flaws, e.g., to apply more powerful heat management system, to adjust the positioning of cooling elements, to use different thermal pads/paste etc.

Specifically, in some embodiments, microcontrollers 111 may be operatively connected with thermal sensors 123 and may be configured to receive the measured temperature of heating elements 122 therefrom. Microcontrollers 111 may be further configured to output the measured temperature of heating elements 122 to user interface module 400, to be provided via the user interface.

Accordingly, to perform thermal management tests, system 10 may further include at least one heat sink thermally coupled with at least one of (i) chip emulating device 100 (ii) one or more peripheral electronic components 212; and (iii) power supply module 211 and configured to dissipate heat therefrom. Thus, temperature and heat dissipation flaws indications (indications 402A) may be indicative of the performance of the heat sink under test. Heat dissipation flaw indications may, e.g., provide alerts when the measured temperature exceeds a certain predefined threshold (system 10 may have different thresholds for different thermal sensors, according to the thermal regime requirements of respective electronic components).

It shall be understood that, according to the present invention, various known types of thermal sensors can be used for thermal management tests. Thermal sensors 123 may be or may include semiconductor-based thermal sensors. Additionally or alternatively, infrared (IR) thermal sensors and/or thermal cameras may be used herein. User interface module 400 may output temperature measurements in the form of tables with numeric values, charts, and/or heat maps.

It shall be appreciated that, the suggested design of the chip emulating device 100, having heating elements 122, thermal sensors 123, switches 112 and microcontrollers 111 integrated into a single module, provides additional benefits and improvements to the relevant technological field as, this way, the chip emulating device 100 represents a complete solution which may be used with different PCBs, as well as with different versions of design of the same PCB (e.g., PCB 210). E.g., when, using the suggested system 10, certain flaws in the design of PCB 210 are revealed, chip emulating device 100 may be disconnected from PCB 210, the flaws may be fixed, and then the corrected version of PCB 210 may be tested with the same chip emulating device 100, providing for convenient and cost-effective debugging process.

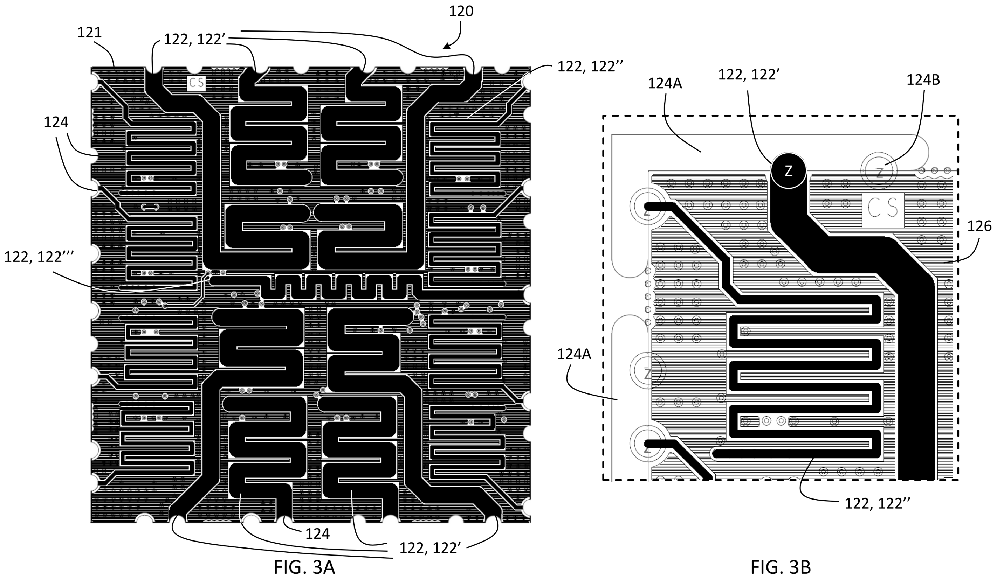

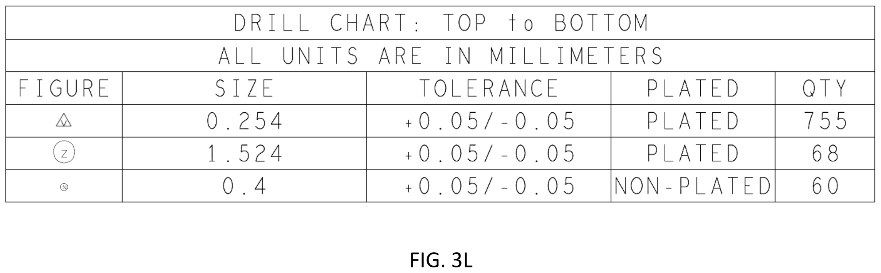

Reference is now made to Figs. 3A-3L, where Figs. 3A-3K illustrate various views of die emulating element 120 of chip emulating device 100, according to some embodiments of the present invention, and Fig. 3L provides a table with a drill chart showing specifications for drills that are shown in Figs. 3A-3K.

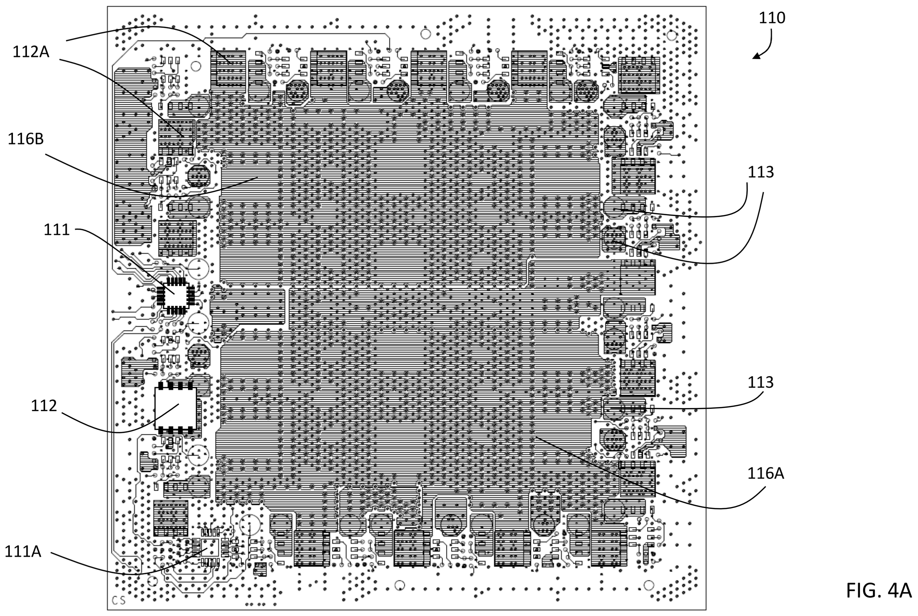

It shall be understood that the configuration of chip emulating device 100 shown in Figs. 3A-3K (die emulating element 120), and in Figs. 4A-4G (substrate board 110) is provided for clarification only and shall not be considered exclusive in any respect. It shall further be appreciated that the demonstrated design is intended to emulate the target chip of a specific configuration, however, the present invention is not limited in respect to the configuration of the target chip and other, completely different chip configurations may be successfully emulated using the suggested techniques.

Fig. 3A shows a top view of die emulating element 120 (the first layer of substrate board 121), according to some embodiments of the present invention.

In the illustrated case, die emulating element 120 includes plurality of heating elements configured to emulate different components of the die of the target chip. As mentioned above, each of heating elements 122 may include a conductive trace formed on the surface of substrate board 121 so as to substantially cover the area on the surface of the substrate board 121 corresponding to the area of the respective component of the die of the target chip. E.g., the target chip may include two cores, wherein each of the cores may be emulated by a respective group of conductive traces 122' (the first group of conductive traces 122' shown in the upper part, and the second group of conductive traces 122' - in the lower part). The target chip may further include eight memory modules, and these memory modules may be emulated using conductive traces 122", respectively. Die emulating element 110 may further include conductive trace 122‴ configured to emulate and other high-power locations inside the die of the target chip.

In order to provide thermal and electrical emulation of the components of the target chip (e.g., cores, memory modules), in some embodiments, conductive traces 122', 122", and 122‴ may be dimensioned so as to operate, given the predefined power parameters of computing device 200 (i.e., of power supply module 211), with the power and thermal density substantially equal to an expected power and thermal density, respectively, of the respective component of the die of the target chip (cores, memory modules, and other high-power locations inside the die, respectively) at the predefined operation mode of the target chip.

Specifically, in some embodiments, it is suggested herein that conductive traces 122', 122" and 122‴ may be formed to have a zig-zag shape characterized by length, width and height such as to provide, given the predefined power parameters of computing device 200 (i.e., of power supply module 211), a power density substantially equal to the expected power density of the respective component of the die of the target chip (cores, memory modules, and other high-power locations inside the die, respectively) at the predefined operation mode of the target chip.

It shall be understood that zig-zag shape represents one of possible embodiments, and other shapes may be used to cover the area on the top surface of substrate board 121 same as the area of the respective component of the die of the target chip. E.g., alternatively, spiral shape may be used, or, in yet another alternative embodiment, dots of the respective size, connected with conductive traces.

Since it is crucial to test the operation of the components of computing device 200 in extreme conditions, in some embodiments, said predefined operation mode of the target chip, according to which the die emulating element 120 is designed, may be the one demanding peak performance of the target chip.

To design conductive traces (e.g., conductive traces 122', 122" and 122"'), the following computational methods may be applied.

To calculate the dimensions of the target conductive trace of heating element 122, the electrical parameters of the respective component of the die of the target chip may be used as an input. E.g., knowing the voltage and current through the component of the die, the overall component's resistance and power may be calculated, which may be used as target parameters that the conductive trace of the heating element 122 should exhibit.

Accordingly, the conductive trace should be designed so as to match the target resistance while also having the same power density (amount of power per unit volume).

The resistance of the conductive trace may be determined using the following formula: $R = ρ ⋅ \frac{L}{T ⋅ W} \left[1+α⋅\left(temp-25\right)\right] ,$
where *ρ* - resistance of the material of the conductive trace (e.g., for copper *ρ = 1.7*×*10⁻⁶ ohm·cm*); *W* - trace width; *L* - trace length; *T* - trace height; *α* - temperature coefficient of resistance of the material of the conductive trace (e.g., for copper *α*=*3.9* × *10⁻³)*; and *temp* - is the target temperature, at which the process is expected to stabilize (i.e., the expected temperature of the conductive trace after a predefined period of operation, corresponding to the temperature of the respective component of the die of the target chip, e.g., 60°C).

Accordingly, using this formula, one can select dimensions of the conductive trace *(W, L,* and *T*) such as to get the value of the resistance of the conductive trace (R) as close to the target resistance of the respective component of the die as possible, while matching the expected power density *(Watt*/*mm²)* between the conductive trace and the component.

Finally, by having conductive traces 122', 122" and 122‴ designed as described above, the obtained die emulating element 120 may be configured so as to operate, given the predefined power parameters of computing device 200 (e.g., of power supply module 211), with the power consumption substantially equal to the expected power consumption of the target chip at the predefined operation mode thereof (e.g., at the mode demanding its peak performance).

As for the mechanical emulation, it shall be understood that its accuracy can be crucial for the reliability of tests, such as thermal management tests. This is because, in high-performance computing applications, dies may have comparatively large dimensions (e.g., an area of approximately 1000-2000 mm²) and be highly powerful (e.g., up to 1-1.2 kW), considering the requirements for mechanical tolerances of coplanarity and flatness of the top surface dictated by the heat management aspects.

As known, for heat management of various peripheral electronic components (e.g., components 212), mechanical tolerances and misalignments of different components may be mitigated using thermal pads. Thermal pads are soft, thermally conductive materials (e.g., silicone infused with ceramic or metallic particles) used to fill gaps between heat-generating components and cooling elements. Thermal pads may therefore provide a conformal interface between uneven surfaces, ensuring good thermal contact along the entire heat dissipating area and reducing thermal resistance.

In contrast to the peripheral electronic components, high power dissipation and large areas of dies designed for high-performance computing purposes does not allow the usage of thermal pads for the mitigation of mechanical tolerances. Accordingly, it is common to use thermal paste instead of thermal pads.

Thermal paste is a highly viscous, thermally conductive compound, usually consisting of a polymerizable liquid matrix (e.g., epoxies, silicones) and large volume fractions of electrically insulating, but thermally conductive filler (e.g., aluminum oxide, boron nitride, zinc oxide particles). It is used to fill microscopic gaps between heat-generating components and cooling elements, ensuring efficient heat transfer. Thermal paste excels in applications requiring maximum thermal conductivity and precise application, such as in CPU and GPU cooling. Unlike thermal pads, which are pre-formed and easier to apply, thermal paste can conform to very fine surface irregularities, providing superior thermal contact. While thermal pads are suitable for filling larger gaps and uneven surfaces, thermal paste is preferred for high-performance scenarios where a thin, highly conductive layer is essential for effective heat dissipation.

Therefore, in order to provide reliable testing of the thermal management system operation (e.g., heat dissipating efficiency of heat sinks and cold plates of liquid cooling solutions) without the target chip (e.g., at the pre-production stage), it is desired to provide accurate emulation of its mechanical aspects. Specifically, it is desired to ensure the desired flatness of the top surface of the die emulating element 120 and to avoid or substantially mitigate its warpage under applied pressure (e.g., from the heat sink or cold plate pressing onto its top surface) and temperature expansions. Even an unevenness of 30 microns can cause irregularities in thermal coupling between the heat dissipating area and the cooling elements, decreasing heat dissipation efficiency and leading to unreliable or erroneous test results.

To address the abovementioned issues one or more of the following aspects of the present invention are provided.

First, as described above, in some embodiments, chip emulating device 100 may have substrate board 110 and die emulating element 120 (in particular, substrate board 121) sized to have the dimensions of the substrate board and the die of the target chip.

Second, in some embodiments, as also mentioned above, each of heating elements 122 may be or may include a conductive trace (e.g., traces 122', 122", and 122"') formed on the surface of substrate board 121 of die emulating element 120. This way, the top surface of substrate board 121 remains substantially flat, as heating elements 122 do not protrude much above the surface thereof, maintaining the overall equality of dimensions of the chip emulating device to the target chip.

Third, to further provide for the required flatness of the surface of substrate board 121, as well as for overall rigidity of chip emulating device 100, various alterations of the substrate boards 110 and 121 layout design with respect to the commonly known layout design approaches are suggested. In particular, as illustrated in Figs. 3A-3G and 4A-4E, it is suggested to perform the layout design, and further photoengraving and etching so, as to keep the free spaces between the conductive traces (e.g., traces 122', 122" and 122‴) filled with copper, etching out only thin strips of copper along the sides of each conductive trace to provide the required electrical insulation. This approach may help to ensure that the top layer has the required flatness, further eliminating the already minor protrusion of heating elements 122 above the surface of substrate board 121. In some embodiments, the same design approach may be applied to each layer of substrate boards 121 and 110, to avoid even insignificant warpage thereof when the stacked layers undergo lamination, further providing technological improvement by increasing accuracy of mechanical emulation.

Fourth, following the suggested approach, the emulation of thermal and electrical behaviour of the real chip designed for the high-performance computing applications requires the comparatively high power (e.g., up to 1.2 kW) to be supplied to the conductive traces of heating elements 122 located the upper layer of substrate board 121. This is a non-trivial task for PCB layout design considering the abovementioned requirements for chip packaging emulation. In particular, soldering substrate board 121 to substrate board 110 must not affect the overall coplanarity and flatness requirement, that is the top surface of substrate board 121 shall be parallel to the upper surface of substrate board 110 after soldering, and the solder shall not protrude above the upper surface of substrate board 121. To address these requirements, the following is suggested.

In some embodiments, substrate board 110 may include conductive pads (e.g., pads 113, as shown in Fig. 4A), which may be circular in shape and large enough to supply the required power without overheating. These conductive pads may be positioned to extend along the perimeter (side edge) of substrate board 121, aligning with the bounding lines that define the overall dimensions of board 121. They may partially extend beyond these bounding lines towards the center of board 121 when board 121 is in the required position relative to board 110. It shall be understood that this required position is the one corresponding to the alignment of the die with the substrate board of the target chip.

Substrate board 121 may, in turn, include semi-circular vias (e.g., vias 124, as shown in Figs. 3A). As known in the art, vias are small holes drilled through the PCB, such as substrate board 121, that are plated with metal, typically copper, to create an electrical connection between different layers of board 121. The semi-circular vias of substrate board 121 (e.g., vias 124) may be aligned with the conductive pads of substrate board 110 (e.g., pads 113, shown in Fig. 4A) and positioned directly across from them when board 121 is aligned with board 110, as required for the emulation. This way, substrate board 121 may be soldered to substrate board 110 by applying solder to the pads of board 110 and smearing it on the sides of the semi-circular vias 124. This ensures that substrate board 121 remains parallel to substrate board 110, avoiding any undesirable misalignments. Additionally, the solder remains below the upper surface of board 121, meeting the aforementioned requirements for emulation, while allowing high currents to be supplied to heating elements 122 without overheating. Semi-circular vias 124 may be filled with conducting material along their full length, providing the conductive area of the required size for proper electrical connection. Semi-circular vias (e.g., vias 124), as discussed herein, may, in some embodiments, refer to "plated half-holes" or "castellated holes" - techniques known in the art for board-on-board connections.

Fifth, additionally or alternatively, in some embodiments, at least one of (i) substrate board 110; and (ii) die emulating element 120 is further configured to exhibit substantially similar deformation characteristics under pressure as (a) the substrate board of the target chip; and (b) the die of the target chip, respectively. For example, this may be achieved by using materials for packaging of substrate board 110 and/or die emulating element 120 that has similar mechanical properties to the materials of the real chip. E.g., substrate board 110 may have the same dimensions and number of layers as the substrate board of the target chip and the die emulating element 120 may have silicone, ceramic or glass packaging.

Fig. 3B shows enlarged top view of die emulating element 120 (the top left corner of the first (top) layer of second substrate board 121), according to some embodiments of the present invention. As can be seen, the spaces between conductive traces are filled with copper (copper filling 128, also referred in the art as "copper pour"), leaving thin etched out strips along the conductive traces to provide the required electrical insulation.

To manufacture substrate board 121 with semi-circular drills 124, the board may first be designed to have ends of conductive traces 122', 122", and 122‴ that are to be connected to substrate board 110 slightly extending beyond the overall dimensions of board 121, while the layout may be made on a substrate piece having dimensions larger, than it is determined by the design of board 121. After photoengraving and etching, target drills may be made in the required locations 124B (marked with the symbol 'Z' in Figs. 3A-3K), similar to the process for standard, full-circle vias. Then, the edge of board 121 may be machined (e.g., along paths 124A) to remove redundant substrate material and give the drills 124 the desired semi-circular shape.

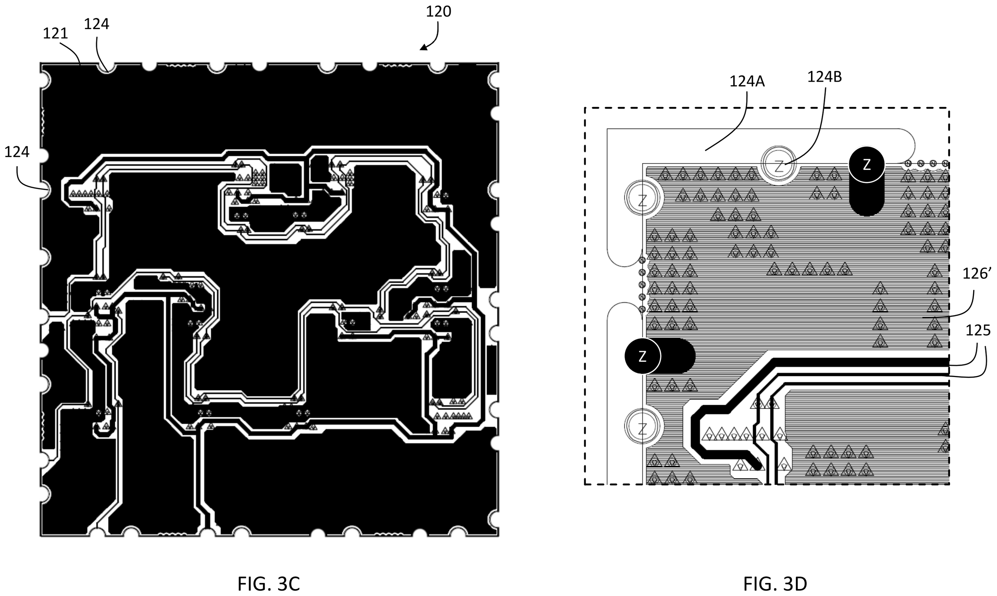

Reference is now made to Fig. 3C, showing the top view of die emulating element 120 (the second layer of substrate board 121), and Fig. 3D which is an enlarged top view of die emulating element 120 (the top left corner of the second layer of substrate board 121), according to some embodiments of the present invention.

In the creation of the chip emulating device, accurately emulating mechanical, electrical, and thermal aspects, the positioning of thermal sensors 123 for measuring temperature of heating elements 122 plays a crucial role. Specifically, the abovementioned requirements for the flatness of the top surface of substrate board 121 make it impossible to position sensors 123 on the top surface.

Accordingly, in some embodiments, it is suggested that thermal sensors 123 are positioned on the bottom side of die emulating element 120 (bottom side of substrate board 121), across from heating elements 122, respectively. Various nuances of this positioning are described in greater detail further below.

As shown in Figs. 3C and 3D, the second layer of substrate board 121 may include conductive traces 125 for power and informational (signal) communication with each of thermal sensors 123 (e.g., thick conductive trace 125 may be configured for power supply, and thin traces 125 - for signal communication). Same as explained above, free spaces in the second layer are filled with copper (copper filling 126'), to provide surface flatness.

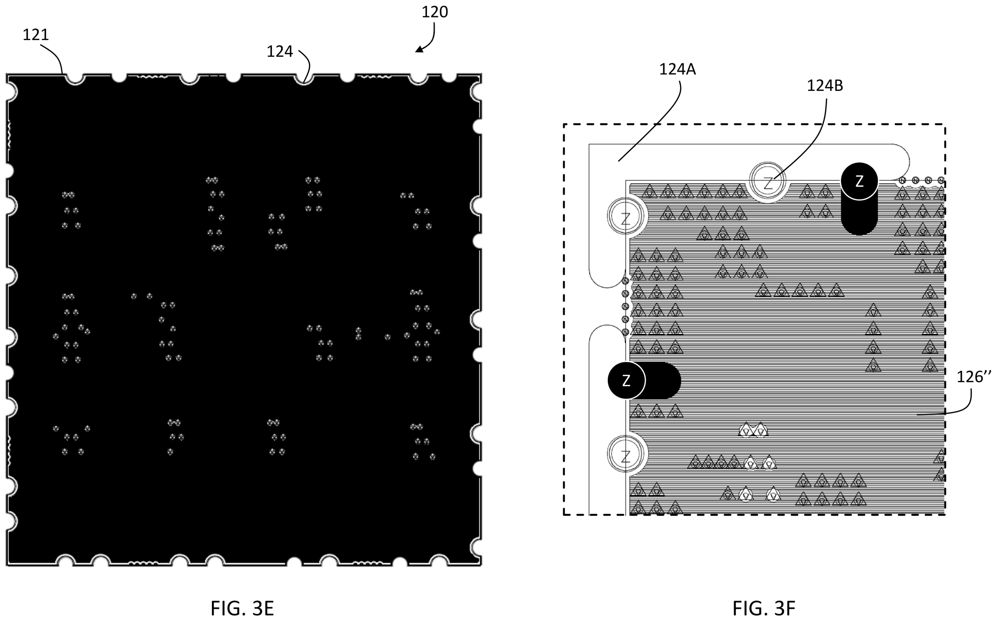

Fig. 3E illustrates the top view of die emulating element 120 (the third layer of substrate board 121), and Fig. 3F is an enlarged top view of die emulating element 120 (the top left corner of the third layer of substrate board 121), according to some embodiments of the present invention.

As shown, the third layer of substrate board 121 may be used to provide a common electrical ground for the connection of heating elements 122 and sensors 123. Same as in previous layers, the layer is filled with copper (copper filling 126").

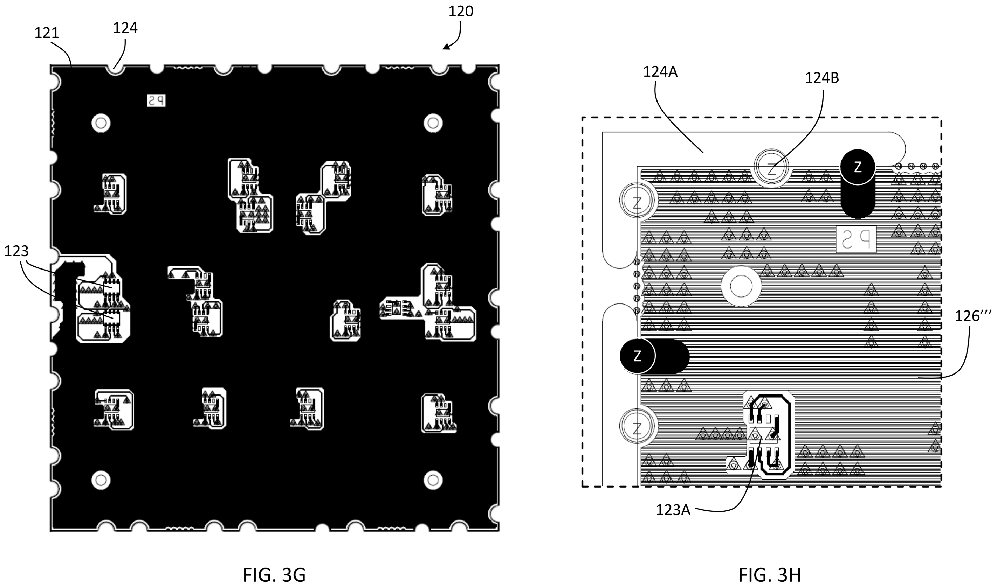

Fig. 3G illustrates the top view of die emulating element 120 (the fourth layer of substrate board 121), and Fig. 3H is an enlarged top view of die emulating element 120 (the top left corner of the fourth layer of substrate board 121), according to some embodiments of the present invention.

As shown, the fourth layer of substrate board 121 may be used for mounting thermal sensors 123. For the purpose of clarity, only two sensors 123 are shown, while for the rest of sensors 123 only footprints 123A are shown. Each of sensors 123 may have thermo-sensing pad on the side facing the upper layer, that is, towards the location of the respective of heating elements 122. Same as with other layers, empty spaces may be filled with copper (copper filling 126‴). As a non-exclusive example, thermal sensors 123 may be sensors made in industry standard LM75 form factor and pinout (corresponding to the design shown in Figs. 3A-3K), e.g., TMP1075 temperature sensor with I2C and SMBus interface.

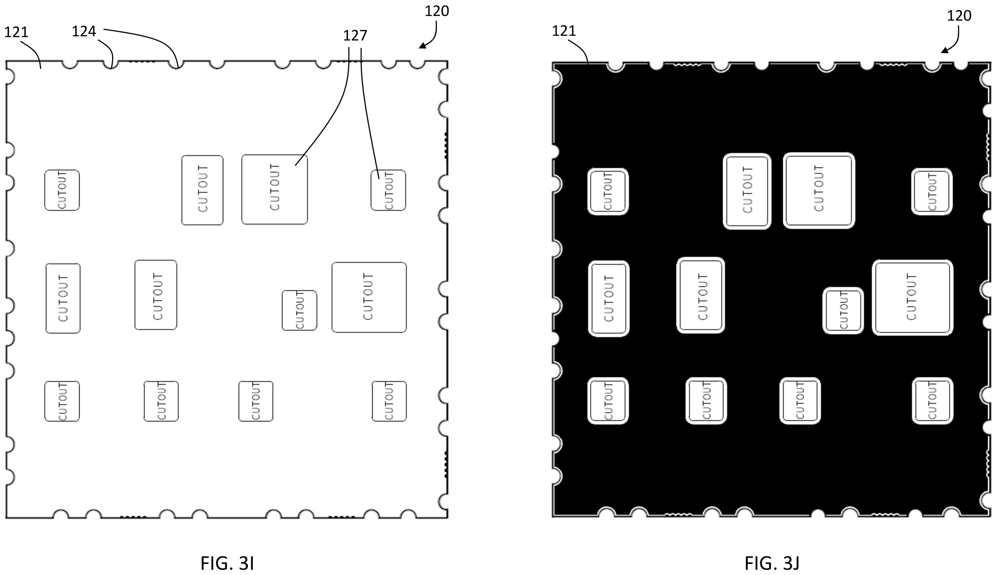

Fig. 3I illustrates a top view of die emulating element 120 (the fifth layer of substrate board 121), and Fig. 3J illustrates a top view of die emulating element 120 (the sixth layer of substrate board 121), according to some embodiments of the present invention.

Since, the provided design requires positioning of thermal sensors 123 under heating elements 122, on the opposite side of substrate board 121, it necessitates additional adjustments of the design of substrate board 121. Specifically, to perform board-to-board connection, and to comply with the requirements of mechanical emulation, the bottom surface of substrate board 121 must be flat. To do that, it is suggested to make the fifth and the sixth layer with cutouts 127 in the locations of thermal sensors 123. This way, these layers may compensate for the height of sensors 123 and provide for the flat bottom layer (with no elements protruding therefrom). It shall be understood that, in some embodiments, depending on the dimensions of sensors 123, additional layers having the same configuration as the fifth and the sixth layer may be used.

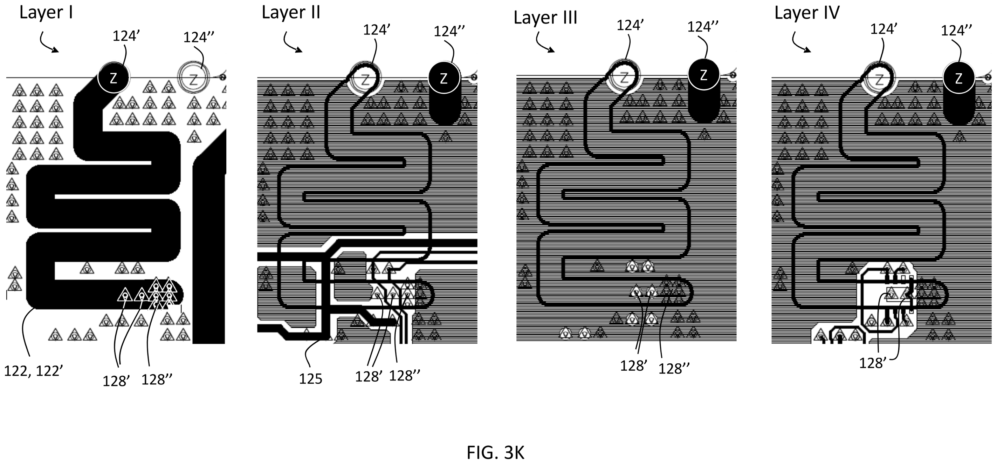

Fig. 3K illustrates essential aspects of inter-layer connection between heating elements 122 and thermal sensors 123. For the purpose of clarity and conciseness, the essential aspects of inter-layer connection are shown with reference to single heating element 122. To show inter-layer connection, the contour line of conductive trace 122' is also shown on the second, third and fourth layers of substrate board 121 (marked "Layer II", "Layer III", and "Layer IV", respectively) although the trace 122' itself is located on the first (top) layer only.

Accordingly, in some embodiments, conductive trace 122' may be operatively connected through semi-circular via 124' to respective switch 112 (not shown), providing electrical connectivity to power supply module 211. At the distal end of conductive trace 122', substrate board 121 may have a set of plated vias 128", connecting conductive trace 122' to the common ground in the third and fourth layers of substrate board 121 (marked "Layer III" and "Layer IV", respectively), which is provided, in particular, through semi-circular via 124".

As shown in the provided example, thermal sensor 123 may have significantly smaller dimensions than the heating element 122. The actual positioning of thermal sensor 123 with respect to the heating element 122 represents yet another essential consideration of the suggested concept.

Known semiconductor-based thermal sensor solutions that may be used as sensor 123 have specific power supply requirements, particularly regarding the electrical potential between the *Vcc* pin and the *GND* pin. In some embodiments, *Vcc* pin may be powered via conductive trace 125 in the second layer of substrate board 121 (marked "Layer II"). To provide perfect conditions for the power supply, the *GND* pin must be connected directly or as close as possible to the common ground (e.g., in the illustrated case, to semi-circular via 124").

However, when considering thermal aspects, positioning thermal sensor 123 close to the common ground (e.g., close to via 124") will increase thermal interference therefrom, thereby significantly decreasing the accuracy of temperature measurements.

Accordingly, it is suggested to position thermal sensor 123 along the length of conductive trace 122' as far from the common ground (e.g., from via 124") as possible, while connecting sensor 123 to the common ground via the conductive trace 122' of the respective heating element 122 at a point along its length that provides an electrical potential difference between the *Vcc* pin and the *GND* pin of sensor 123 close to the minimal acceptable value, as specified by the power supply requirements for the normal operation of sensor 123. This way, the accuracy of temperature measurement is maximized within the constraints of the power supply requirements, thereby further contributing to the improvement of the relevant technological field.

Accordingly, *GND* pin of sensor 123 (only the footprint of sensor 123 is shown) may be connected to the common ground through conductive trace 122', e.g., using one of vias 128' (the right one of vias 128', as shown in "Layer IV" image).

To improve the accuracy of temperature measurements, it is further suggested that, in some embodiments, substrate board 121 includes plated vias, extending from the upper layer of substrate board 121 to the layer with thermal sensors 123 and connected, from the one end, to the conductive trace of the heating element (e.g., conductive trace 122' of heating element 122) and, from another end, to the thermo-sensing pad of the respective thermal sensor 123, or substantially close thereto. E.g., as shown in Fig. 3K, "Layer I" and "Layer IV", two vias 128' are connected to conductive trace 122' in the first layer ("Layer I") and extending to the fourth layer ("Layer IV"), where they are positioned substantially in the center of the footprint of sensor 123, so that, when the sensor 123 is mounted on board 121, its thermo-sensing pad (shown as a rectangle around vias 128') is adjacent to vias 128'. Thereby, in the suggested configuration, vias 128' may function as heat conductors to transfer heat through layers of substrate board 121 from conductive trace 122' to thermal sensor 123, thereby allowing accurate temperature measurement and thus providing further technological improvement.

Fig. 3L provides a table with a drill chart showing specifications for various drills shown in Figs. 3A-3K, according to some embodiments of the present invention.

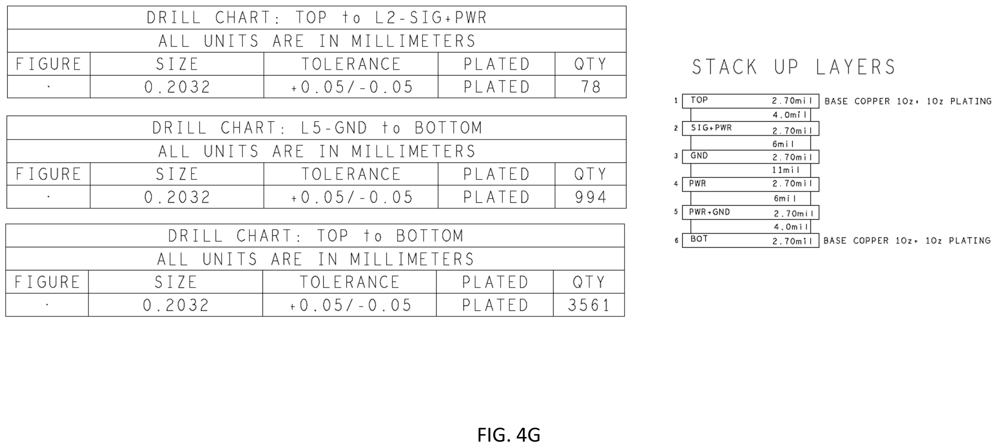

Reference is now made to Figs. 4A-4G, where Figs. 4A-4F illustrate various views of substrate board 110 of chip emulating device 100, according to some embodiments of the present invention, and Fig. 4G provides a table with a drill chart showing specifications for various drills shown in Figs. 4A-4F, and also a stack-up of the layers of substrate board 110.

Fig. 4A shows a top view of substrate board 110 of chip emulating device 100 (the first (upper) layer), according to some embodiments of the present invention.

As shown, in some embodiments, substrate board 110 may include microcontrollers 111 and switches 112 (e.g., FET transistors) assembled on the upper (first) layer thereof. For the purpose of clarity, only single microcontroller 111 and switch 112 are shown, while for the rest of microcontrollers 111 and switches 112 only footprints 111A and 112A, respectively, are shown.

As mentioned above, at the upper layer, substrate board 110 also includes conductive pads 113 that, in the assembled state, may be operatively connected (e.g., soldered) to semi-circular vias 124 of substrate board 121, respectively, and configured for providing power to heating elements 122, as well as for power and informational (signal) communication with thermal sensors 123. In the illustrated configuration, the first layer of substrate board 110 is configured to provide power communication to the group of heating elements 122 that is responsible for the emulation of the first and second cores of the die of the target chip (conductive traces 122', shown in Fig. 3A), in particular, via conductive segments 116A and 116B, respectively.

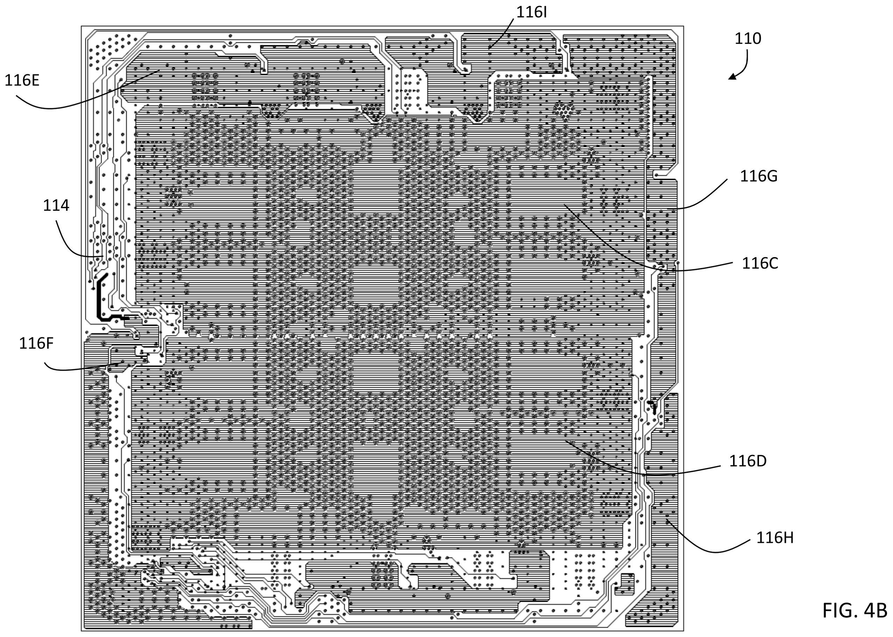

Fig. 4B shows a top view of substrate board 110 of chip emulating device 100 (the second layer), according to some embodiments of the present invention.

In the illustrated embodiment, the second layer of substrate board 110 may be configured to provide power and informational (signal) communication to the group of heating elements 122 that is responsible for the emulation of the memory modules (HBM) of the die of the target chip (conductive traces 122", shown in Fig. 3A), in particular, via conductive segments 116C and 116D, as well as via conductive traces 114. Conductive segments 116E-116I may be configured to provide communication to the ground.

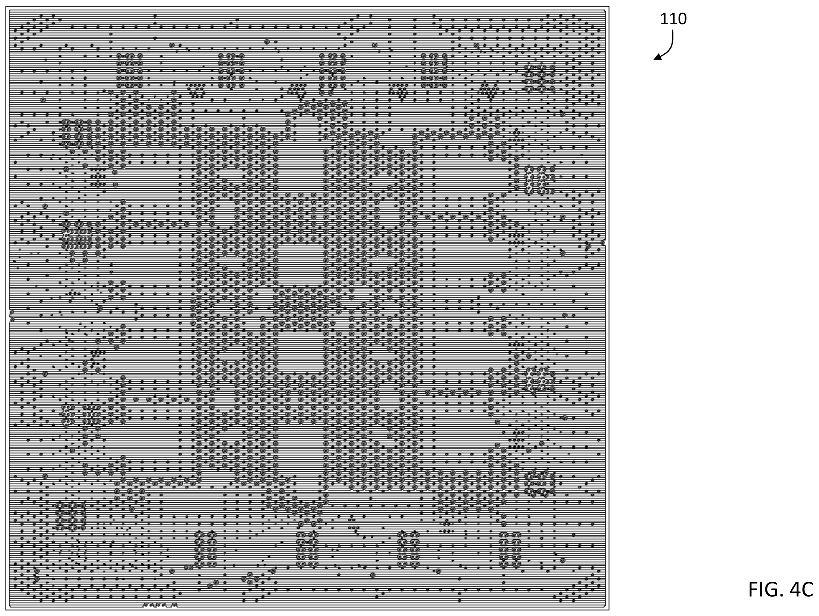

Fig. 4C is a top view of substrate board 110 of chip emulating device 100 (the third layer), according to some embodiments of the present invention. In the illustrated embodiment, the third layer of substrate board 110 may be configured to provide communication to the common ground.

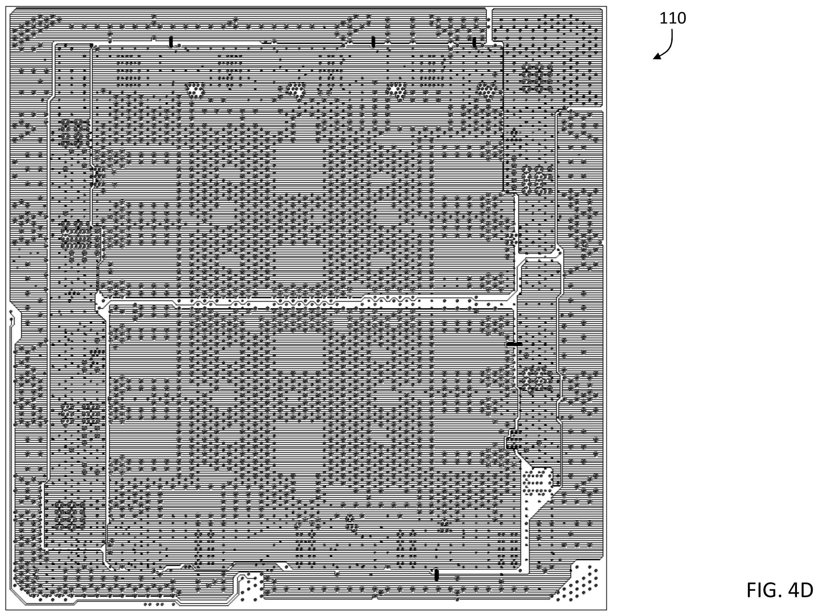

Fig. 4D is a top view of substrate board 110 of chip emulating device 100 (the fourth layer), according to some embodiments of the present invention. In the illustrated embodiment, the fourth layer of substrate board 110 may be configured to provide communication to the positive supply voltage.

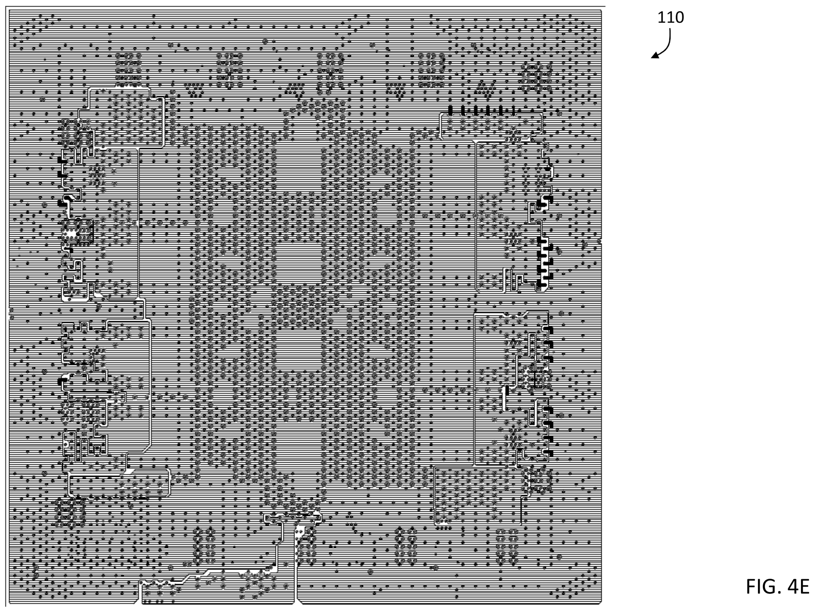

Fig. 4E is a top view of substrate board 110 of chip emulating device 100 (the fifth layer), according to some embodiments of the present invention. In the illustrated embodiment, the fifth layer of substrate board 110 may be configured to provide communication to both the common ground and the positive supply voltage.

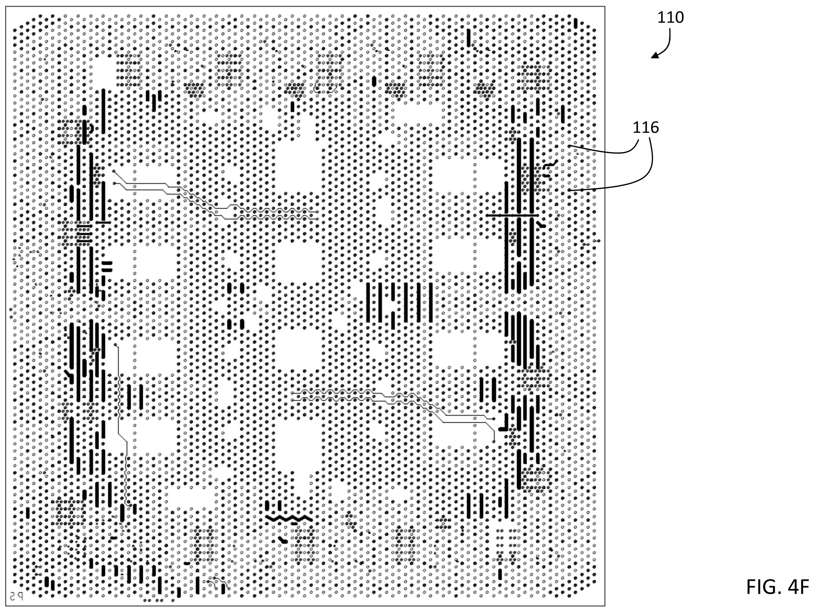

Fig. 4F is a top view of substrate board 110 of chip emulating device 100 (the sixth (bottom) layer), according to some embodiments of the present invention. In the illustrated embodiment, the bottom layer of substrate board 110 may be configured to provide communication to PCB 210, specifically, to the footprint of the target chip. The communication of substrate board 110 to PCB 210 may be performed using known techniques, e.g., using Ball Grid Array (BGA) method.

Fig. 4G is a table with a drill chart showing specifications for various drills shown in Figs. 4A-4F, and also a stack-up of the layers of substrate board 110, according to some embodiments of the present invention.

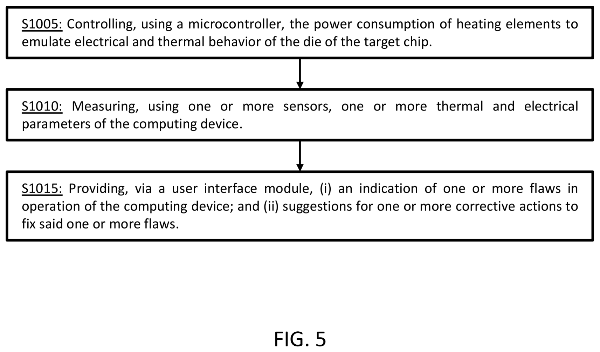

Referring now to Fig. 5, depicting a method for testing components of computing device 200, according to some embodiments of the present invention.

As shown in step S1005, the suggested method may include operating a microcontroller (e.g., operating microcontroller 111 via user interface module 400, as shown in Fig. 2) operatively connected to one or more heating elements (e.g., heating elements 122, shown in Figs. 2 and 3A), to control the power consumption thereof, when being powered via a printed circuit board (PCB) of the computing device (e.g., PCB 210 of computing device 200), said one or more heating elements (e.g., heating elements 122, shown in Figs. 2 and 3A) being designed to emulate, given predefined power parameters of the computing device (e.g., of power supply module 211 of computing device 200), an electrical and thermal behavior of a die of a target chip or at least one component thereof (e.g., core or memory module of the die), said microcontroller (e.g., microcontroller 111, shown in Figs. 1, 2 and 4A) and said one or more heating elements being assembled on a substrate board (e.g., substrate board 110, shown in Figs. 1, 2, and 4A) operatively connected to the PCB (e.g., PCB 210, shown in Figs. 1 and 2) via a target footprint configured to provide operative connection of the target chip to the PCB.

As shown in step S1010, the suggested method may further include measuring, using one or more sensors (e.g., thermal sensors 123, shown in Figs. 2 and 3G; or electrical testing means 300), one or more thermal and electrical parameters (e.g., heat dissipation, transient response, power delivery stability) of the computing device (e.g., computing device 200, shown in Fig. 2).

As shown in step S1015, the suggested method may further include providing, via a user interface module (e.g., user interface module 400, shown in Fig. 2), (i) an indication of one or more flaws (e.g., flaw indication 402A, shown in Fig. 2) in operation of the computing device (e.g., computing device 200, shown in Fig. 2), based on the measured one or more thermal and electrical parameters (e.g., temperature measured by sensors 123, shown in Fig. 2, heat dissipation, transient response, power delivery stability); and (ii) suggestions for one or more corrective actions to fix said one or more flaws (e.g., suggestions 403A, shown in Fig. 2), based on the measured one or more thermal and electrical parameters.

As can be seen from the provided description, the claimed invention represents chip emulating techniques that provide an improvement to the technological field of hardware testing and validation. Specifically, the present invention provides solutions that can accurately emulate integrated circuit behavior across thermal, electrical, and mechanical domains simultaneously, thereby providing for increased testing efficiency and accuracy. The chip emulating device as suggested herein provides for streamlining the development process, reducing time-to-market, and improving overall product quality and reliability in the electronics industry.

The present invention further represents testing system and method that incorporate such improved chip emulation capabilities, thereby advancing the aforementioned technological field by enabling more thorough validation of thermal, electrical and mechanical compatibility across different electronic components of the computing device prior to final production. Specifically, the suggested device, system and method provide for improved accuracy and reliability when identifying potential issues of the target computing device design, thus allowing their resolution earlier in the development cycle when corrections are less costly and time-consuming.

Unless explicitly stated, the method embodiments described herein are not constrained to a particular order or sequence. Furthermore, all formulas described herein are intended as examples only and other or different formulas may be used. Additionally, some of the described method embodiments or elements thereof may occur or be performed at the same point in time.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A chip emulating device for testing components of a computing device, comprising:
a first substrate board configured to be assembled on a target footprint located on a printed circuit board (PCB) of the computing device, said footprint being configured to provide operative connection of a target chip to the PCB;
a die emulating element operatively connected to the first substrate board, the die emulating element comprising one or more heating elements designed to emulate, given predefined power parameters of the computing device, a thermal behaviour of a die of the target chip or at least one component thereof, when the chip emulating device is assembled on the PCB and is being powered therethrough.

2. The chip emulating device of claim 1, wherein said one or more heating elements are further designed to emulate, given power parameters of the computing device, an electrical behaviour of the target chip or at least one component thereof.

3. The chip emulating device according to any one of claims 1 and 2, wherein at least one of (i) the first substrate board; and (ii) the die emulating element is further configured to exhibit substantially similar deformation characteristics under pressure as (a) a substrate board of the target chip; and (b) the die of the target chip, respectively.

4. The chip emulating device according to any one of claims 1-3, further comprising
one or more thermal sensors configured to measure temperature of said one or more heating elements, respectively; and
a microcontroller operatively connected to the one or more heating elements and said one or more thermal sensors and configured to:
control a power consumption of the one or more heating elements;
receive, from said one or more thermal sensors, the measured temperature of said one or more heating elements; and
output the measured temperature of said one or more heating element to a user interface module, to be provided via a user interface.

5. The chip emulating device of claim 4, wherein said one or more heating elements are positioned on a top side of the die emulating element, and said one or more thermal sensors are positioned on a bottom side of the die emulating element, across from said one or more heating elements, respectively.

6. The chip emulating device according to any one of claims 1-5, wherein the first substrate board has dimensions of a substrate board of the target chip and a pinout compatible with the target footprint; and wherein the die emulating element comprises a second substrate board sized according to the dimensions of a die of the target chip, and wherein each of said one or more heating elements comprises a conductive trace formed on a surface of the second substrate board so as to substantially cover an area on the surface of the second substrate board corresponding to an area of a respective component of the die of the target chip.

7. The chip emulating device of claim 6, wherein the conductive trace is dimensioned so as to operate, given the predefined power parameters of the computing device, with a power and thermal density substantially equal to an expected power and thermal density, respectively, of the respective component of the die at the predefined operation mode of the target chip.

8. The chip emulating device of claim 7, wherein the conductive trace is formed to have at least one of a zig-zag shape and spiral shape **characterized by** length, width and height such as to provide, given the predefined power parameters of the computing device, a power density substantially equal to the expected power density of the respective component of the die at the predefined operation mode of the target chip.

9. The chip emulating device according to any one of claims 7 and 8, wherein said predefined operation mode of the target chip demanding peak performance thereof.

10. The chip emulating device according to any one of claims 1-9, wherein the die emulating element is configured so as to operate, given the predefined power parameters of the computing device, with a power consumption substantially equal to an expected power consumption of the target chip at a predefined operation mode thereof.

11. The chip emulating device according to any one of claims 1-10, wherein said microcontroller is further configured to operate said one or more heating elements to simulate various operation scenarios of the target chip or components thereof, said operation scenarios comprising at least one of: (i) toggling said one or more heating elements in a predefined pattern, to test a transient response of a power supply module of the computing device; (ii) maintaining said one or more heating elements in an active state for a predefined period, to test a direct current (DC) power delivery stability and heat dissipation of the computing device.

12. The chip emulating device according to any one of claims 1-11, further comprising a structural stiffener ring, attached to and extending along the peripheral area of the first substrate board.

13. A system for testing components of a computing device, the system comprising:
a printed circuit board (PCB) of the computing device, the PCB comprising a power supply module and a target footprint configured to provide operative connection of a target chip; and
a chip emulating device, comprising:
a first substrate board operatively connected to the PCB via the target footprint;
a die emulating element operatively connected to the first substrate board, the die emulating element comprising one or more heating elements designed to emulate, given predefined power parameters of the power supply module, a thermal behaviour of a die of the target chip or at least one component thereof; and
a microcontroller operatively connected to the one or more heating elements and configured to control power consumption thereof, said one or more heating elements being powered by the power supply module.

14. The system according to claim 13, wherein the PCB comprises one or more peripheral electronic components assembled thereon; and
wherein the system further comprises:
one or more thermal sensors configured to measure temperature of at least one of (i) the chip emulating device (ii) said one or more peripheral electronic components; and (iii) the power supply module;
at least one heat sink thermally coupled with at least one of (i) the chip emulating device (ii) said one or more peripheral electronic components; and (iii) the power supply module and configured to dissipate heat therefrom; and
a user interface module operatively connected to the one or more thermal sensors and configured to provide a visual interface to indicate one or more heat dissipation flaws, based on the measured temperature.

15. A method for testing components of a computing device, the method comprising:
operating a microcontroller operatively connected to one or more heating elements, to control the power consumption thereof, when being powered via a printed circuit board (PCB) of the computing device, said one or more heating elements being designed to emulate, given predefined power parameters of the computing device, an electrical and thermal behaviour of a die of a target chip or at least one component thereof, said microcontroller and said one or more heating elements being assembled on a substrate board operatively connected to the PCB via a target footprint configured to provide operative connection of the target chip to the PCB;
measuring, using one or more sensors, one or more thermal and electrical parameters of the computing device; and
providing, via a user interface module, (i) an indication of one or more flaws in operation of the computing device, based on the measured one or more thermal and electrical parameters; and (ii) suggestions for one or more corrective actions to fix said one or more flaws, based on the measured one or more thermal and electrical parameters.
